# FASCICULE DE BREVET EUROPEEN

(11) **EP 1 272 775 B1**
(45) Date de publication et mention de la délivrance du brevet: **08.03.2006**
(21) Numéro de dépôt: 01927756.5
(22) Date de dépôt: 19.03.2001
(51) Int. Cl.: F16F 13/14

(54) **ARTICULATION HYDROELASTIQUE**
HYDROELASTISCHES GELENK
HYDROELASTIC ARTICULATION

(30) Priorité: 31.03.2000 FR 0004529
(43) Date de publication de la demande: 08.01.2003
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: DE FONTENAY, Etienne, F-58300 Décize (FR)
(74) Mandataire: Bauvir, Jacques
(86) Numéro de dépôt international: PCT/EP2001/003139
(87) Numéro de publication internationale: WO 2001/075328

(56) Documents cités:
- EP-A- 0 528 253
- DE-A- 4 117 129
- FR-A- 2 343 931
- US-A- 4 892 444
- PATENT ABSTRACTS OF JAPAN vol. 008, no. 146 (M-307), 7 juillet 1984 (1984-07-07) & JP 59 043239 A (TOUKAI GOMU KOGYO KK), 10 mars 1984 (1984-03-10)

## Description

La présente invention concerne les articulations élastiques contenant un fluide, appelées généralement " articulations hydroélastique ", et elle concerne les procédés d'obtention de ces articulations.

Ces articulations que l'on désigne également sous les noms de cales, manchons, " bushing " sont utilisées en particulier dans le domaine automobile dans la liaison au sol ou pour la liaison du groupe propulseur à la caisse du véhicule, comme décrit dans le document EP-A- 0 528 253.

Ces articulations hydroélastiques, généralement constituées d'une armature intérieure et d'une armature extérieure sensiblement coaxiales reliées entre elles par au moins un corps déformable, ont généralement un double rôle. D'une part, elles permettent des degrés de liberté aux éléments rigides qu'elles relient, et d'autre part elles filtrent une part importante des vibrations ou des chocs transmis par la route ou par le moteur à la caisse du véhicule. Afin d'améliorer les performances d'amortissement, un liquide circule, par des canaux, entre des chambres de travail en fonction des déformations imposées à l'articulation. L'inertie de ce liquide engendre des forces de réaction dont les caractéristiques varient en fonction de la fréquence des sollicitations. On mesure généralement l'effet des forces de réaction par l'angle de déphasage introduit entre les sollicitations et la résultante des forces de réaction. Un autre paramètre caractéristique est la fréquence pour laquelle la rigidité dynamique de l'articulation est minimale. En choisissant les caractéristiques des chambres de travail, des canaux, des corps déformables, on sait adapter la réponse d'une articulation hydroélastique à un profil prévu de sollicitation (fréquence, amplitude, direction). On obtient ainsi une nette amélioration de l'amortissement par rapport à une articulation classique ne contenant pas de liquide.

Cependant, une articulation hydroélastique est généralement soumise à des sollicitations différentes suivant plusieurs directions et on peut souhaiter des réponses différentes (donc des caractéristiques différentes selon les directions de sollicitations). Une difficulté dans la conception d'articulations hydroélastiques est de permettre ces caractéristiques spécifiques indépendamment les uns des autres. Il n'est pas rare de perdre les avantages qu'une conception déterminée apporte selon une direction lorsque l'on modifie des paramètres a priori liés aux performances selon une direction différente. Des comportements très différents selon les directions ne sont pas nécessairement indépendants, loin s'en faut.

De la même manière, une articulation hydroélastique est souvent soumise à des sollicitations de fréquences et d'amplitudes variables dans le temps suivant chaque direction et on souhaite des réponses adaptées dans le domaine de sollicitations le plus large possible. C'est à dire que l'on voudrait pouvoir régler plusieurs points de fonctionnement dans ce domaine sans devoir accepter de dégrader l'un pour améliorer l'autre.

Un objectif de l'invention est donc une articulation hydroélastique qui permette à la fois des comportements différents selon les directions et les types de sollicitations et une interdépendance limitée de ces différents comportements.

Cet objectif est atteint par une articulation hydroélastique selon la revendication 1.

Les différents principes de l'invention, ainsi que des modes préférés de réalisation, seront mieux compris à l'aide de la description des figures suivantes :
La figure 1 est une coupe radiale d'une articulation hydroélastique selon l'invention,
La figure 2 est une coupe le long de l'axe d'une articulation hydroélastique selon l'invention,
La figure 3 est une coupe radiale d'une articulation hydroélastique selon l'invention,
La figure 4 est une coupe le long de l'axe d'une articulation hydroélastique selon l'invention,
La figure 5 est une vue en perspective d'un élément de base constitutif d'une articulation hydroélastique selon l'invention,
La figure est une coupe le long de l'axe d'une articulation hydroélastique selon l'invention.

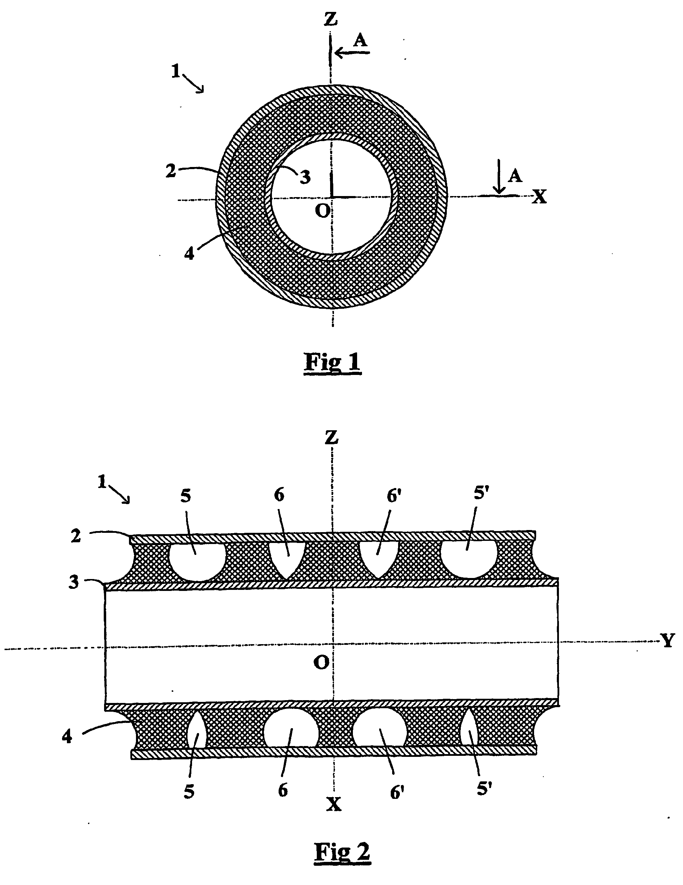

La figure 1 est une coupe radiale d'une articulation hydroélastique (1) selon l'invention. Une armature intérieure (3) et une armature extérieure (2) sont liées par un manchon élastomérique (4). Des rotations et des mouvements radiaux et axiaux d'une armature par rapport à l'autre sont ainsi possibles.

La figure 2 est une coupe le long de la ligne brisée ZOX de l'articulation hydroélastique (1) de la figure 1 en vue selon AA. L'articulation hydroélastique comprend, sur cet exemple, 4 circuits hydrauliques principaux (5, 5', 6, 6') indépendants disposés sensiblement parallèlement, c'est à dire juxtaposées, le long de l'axe OY. On entend par « circuit hydraulique » un ensemble comprenant au moins deux chambres et au moins un conduit reliant ces chambres. Cette représentation schématique permet de visualiser la variation de section des différents circuits. On comprend sur cette figure que les circuits (5, 5') situés aux extrémités de l'articulation comportent une section réduite au niveau du plan OXY (plan horizontal de la figure 1). Cette réduction de section influence directement le comportement vibratoire de l'articulation selon l'axe OZ (axe radial vertical sur la figure 1). Les circuits (6, 6') situés ici au centre de l'articulation comportent une section réduite au niveau du plan OYZ (plan axial vertical de la figure 1). Cette réduction de section influence directement le comportement vibratoire de l'articulation selon l'axe OX (axe radial horizontal sur la figure 1). De cette façon, l'articulation hydroélastique de l'invention combine des comportements différents selon les différents axes de sollicitation et ces comportements sont relativement indépendants.

Les formes des circuits hydrauliques sont décrites ici de façon tout à fait schématique, de même que les axes sont choisis de façon arbitraire pour illustrer le principe de l'invention. En particulier, les projections annulaires du manchon élastomérique (4) peuvent prendre toute forme utile au fonctionnement hydraulique et à la transmission des efforts mécaniques (compression radiale, torsion axiale, torsion conique, etc...). L'homme du métier sait configurer les différentes chambres et conduits reliant les chambres en fonction de la réponse souhaitée selon une direction donnée et un profil de sollicitation donné. Le nombre de circuits nécessaires et également variable, on comprend bien qu'il est en particulier dépendant de la complexité du profil de sollicitations envisagé.

Par exemple, l'articulation de l'invention telle qu'elle est décrite sur la figure 2 peut présenter une rigidité dynamique selon la direction OX qui soit minimale autour de 250 Hz (pour limiter, par exemple, la transmission à la caisse d'une vibration engendrée par le pneumatique) et présenter également une rigidité dynamique selon la direction OZ qui soit minimale autour de 100 Hz (pour limiter, par exemple, la transmission à la caisse d'une vibration générée par un élément de la liaison au sol).

Un autre exemple intéressant d'adaptation de l'articulation hydroélastique de l'invention est celui qui consiste à configurer des circuits de sorte qu'ils procurent, dans des directions sensiblement identiques, des minima de rigidité dynamique différents afin d'obtenir, par la superposition des différentes réponses de chaque circuit, une réponse globale de l'articulation présentant un large domaine de fréquence où la rigidité est sensiblement minimale. Un tel résultat n'est pas réalisable par les articulations de l'état de la technique.

Bien sûr, une articulation selon l'invention peut combiner un grand nombre de circuits et intégrer les deux modes d'adaptation décrit ci dessus. Ainsi, chaque direction correspondant à un mode de sollicitation identifié peut recevoir en fonction de la réponse recherchée, un, deux ou plusieurs circuits hydrauliques similaires ou différents.

Afin d'influencer le fonctionnement hydraulique lors de déformations coniques (rotation relative des armatures autour de l'axe OX, par exemple), des canaux peuvent relier des circuits adjacents, par exemple le long de l'armature extérieure (2) ou à travers des conduits traversant les projections annulaires du manchon élastomérique (4). La présence d'une telle communication peut également faciliter l'opération de remplissage de l'articulation en liquide.

Les circuits sont ici représentés en boucles, c'est à dire qu'ils forment un anneau autour de l'axe de l'articulation, mais cette configuration n'est pas limitative. En effet le principe de fonctionnement hydraulique connu en soi s'applique de façon similaire si l'anneau est interrompu. De plus, chaque circuit peut compter moins d'une révolution ou, au contraire, plus d'une révolution autour de l'axe de l'articulation, de manière à donner les dimensions souhaitées au conduit de liquide hydraulique. Dans ce cas, par exemple pour des raisons d'encombrement ou de fabrication, lesdits circuits pourront avoir une configuration légèrement oblique par rapport à l'axe de l'articulation.

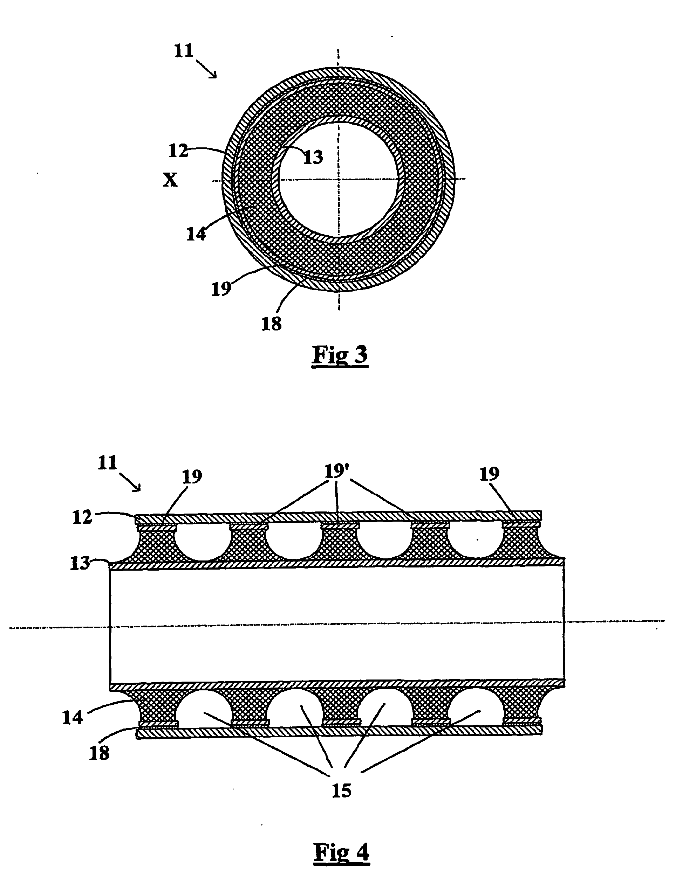

Les figures 3 à 6 représentent des modes préférés de fabrication d'une articulation hydroélastique (11, 21) selon l'invention. Les figures (dans un souci de clarté) ne montrent pas de variation de section. Une telle configuration peut présenter un fonctionnement hydraulique satisfaisant dans certaines applications mais il est évident que les variations de sections envisagées et décrites plus haut peuvent être obtenues par ces modes préférés de fabrication.

Les figures 3 et 4 sont des vues similaires à celles des figures 1 et 2. Le manchon élastomérique (14) peut être moulé ou extrudé sur l'armature intérieure (13) en une ou plusieurs opérations à partir d'un matériau unique ou différent pour chaque projection annulaire. Les anneaux (19, 19') rigides (supplémentaires par rapport aux figures 1 et 2) peuvent être adhérisés aux projections annulaires de façon connue. Ces anneaux rigides (19, 19') permettent un sertissage (connu en soi) par compression radiale plastique de l'armature extérieure (12). De préférence, un joint (18) assure l'étanchéité des circuits hydrauliques. Ce joint peut être constitué lors du moulage du manchon élastomérique (14). Comme le suggèrent les figures, l'assemblage du manchon élastomérique, de l'armature intérieure (13) et éventuellement des anneaux rigides (19, 19') peut se faire en grande longueur ou en continu (longueur infinie) puis la longueur nécessaire pour une articulation donnée est tronçonnée et l'on procède ensuite au sertissage, par rétreint, de l'armature extérieure (12). Le remplissage des circuits hydrauliques (15) peut se faire par exemple par dépression par l'intermédiaire d'orifices pratiqués dans l'une ou l'autre des armatures ou par immersion lors de l'assemblage de l'armature extérieure. L'étanchéité, indispensable aux extrémités de l'articulation, peut ne pas être indispensable entre les circuits. C'est pourquoi les 3 anneaux rigides centraux (19') représentés ici peuvent, dans une réalisation alternative, être omis.

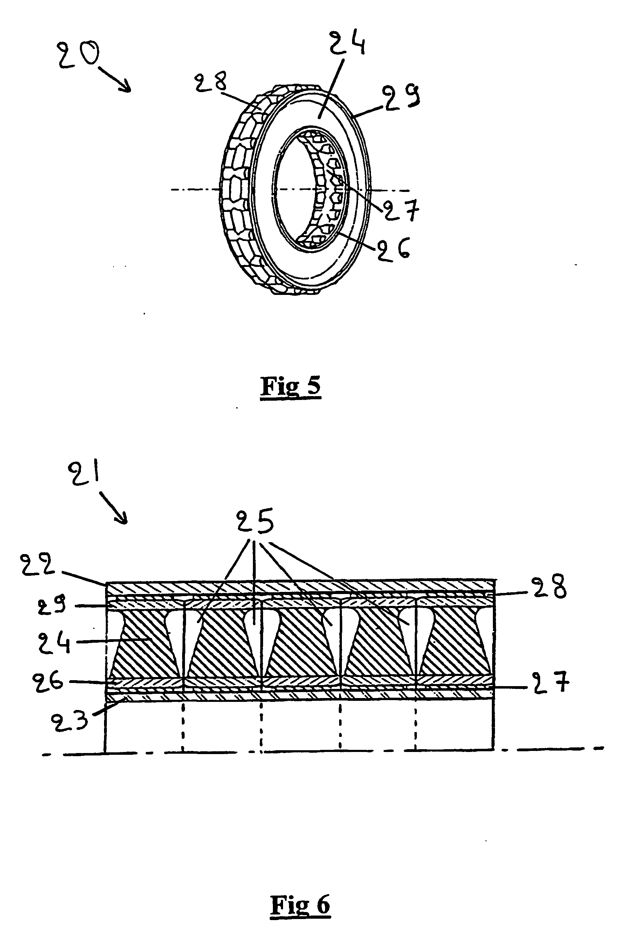

Les figures 5 et 6 représentent un mode alternatif de fabrication. La figure 5 est une vue en perspective d'un élément de base (20). La figure 6 est une demie vue en coupe axiale d'une articulation hydroélastique (21), constituée d'éléments de base (20) adjacents axialement disposés, et formant, entre eux, des circuits hydrauliques (25) indépendants. L'élément de base (20) comporte une sous-armature intérieure (26) et une sous-armature extérieure (29) reliée par un manchon élastomérique (24). Des joints d'étanchéité extérieur (28) et intérieur (27) sont solidaires des sous-armatures correspondantes. Les éléments de base (20) sont assemblés par l'intermédiaire d'une armature intérieure (23) et d'une armature extérieure (22). Les liaisons sont, comme précédemment décrit, assurées par sertissage, ajustement serré, collage, adhérisation ou tout moyen connu. Le profil des manchons (24) ménage, entre deux éléments (20) jointifs ou distants, un circuit hydraulique (25). On comprend l'intérêt de ce mode de réalisation de l'invention qui permet l'assemblage d'un nombre variable d'éléments de base différents, selon des orientations et des écartements libres. On peut naturellement utiliser une grande diversité de profil, d'épaisseur, de nature, de rigidité, de hauteur des manchons (24). Ainsi, tant au stade de la conception que de la fabrication en petites séries, cette modularité permet une importante optimisation. Dans le cas d'une articulation ayant également une fonction de ressort de torsion (voir plus haut), cette plus grande liberté d'adaptation peut être particulièrement utile pour fixer, dans la phase de mise au point, tous les paramètres vibratoires d'un véhicule parallèlement à l'adaptation de la rigidité de torsion.

Alternativement, comme décrit plus haut en liaison avec la figure 1, chaque élément de base (20) peut comporter un ou des circuit(s) hydraulique(s) dans le volume de son manchon (24). L'articulation de l'invention est alors constituée à partir d'une pluralité d'éléments de base ayant chacun un fonctionnement hydroélastique propre donnant à cet ensemble le comportement recherché. Naturellement, cette configuration peut être combinée à celle décrite au paragraphe ci dessus, avec ou sans communication hydraulique entre les circuits propres à chaque élément de base et les cavités ménagées entre des éléments adjacents.

De préférence, l'articulation selon l'invention est destinée à assurer, en plus du rôle de liaison et de filtrage décrit en préambule, également une fonction de ressort de torsion, par exemple dans le cadre de la suspension d'un bras de roue du type décrit dans le document WO97/47486. Ainsi, on peut désirer obtenir une articulation hydroélastique qui soit, à la fois, extrêmement rigide en torsion autour de son axe, relativement rigide en translation axiale et statiquement et dynamiquement très peu rigide en translation radiale. Ceci est réalisé par les configurations décrites sur les figures où la section soumise à la torsion est peu réduite par rapport à une pièce monobloc mais où la raideur radiale est diminuée de façon importante du fait des cavités hydrauliques dans le manchon élastique, ces cavités empêchant la saturation du caoutchouc.

Naturellement, la section d'une articulation hydroélastique selon l'invention n'est pas limitée à un profil circulaire comme représenté sur les figures. Cette configuration est la plus courante mais on peut attendre les mêmes effets des principes de l'invention avec d'autres profils d'articulations.

## Revendications

1. Articulation hydroélastique (1, 11, 21) comportant une armature intérieure (3, 13, 23) et une armature extérieure (2, 12, 22) sensiblement coaxiales, **caractérisé en ce que** lesdites armatures étant solidaires d'un manchon élastomérique (4, 14, 24), ledit manchon élastomérique comporte, le long de son axe (OY), des circuits hydrauliques (5, 5', 6, 6', 25) radiaux, indépendants et sensiblement parallèles, lesdits circuits hydrauliques comprenant des variations de section.

2. Articulation hydroélastique selon la revendication 1, **caractérisée en ce qu'**elle est constituée d'éléments de base (20) adjacents axialement disposés, entre une armature intérieure (23) et une armature extérieure (22), chaque élément de base comprenant une sous-armature extérieure (29) et une sous-armature intérieure (26) solidaires d'un manchon élastomérique (24), lesdits circuits hydrauliques (25) étant ménagés entre lesdits éléments de base (20).

3. Articulation hydroélastique selon l'une des revendications précédentes, **caractérisée en ce que** des circuits hydrauliques sont configurés pour présenter des minima de rigidité dynamique selon différentes directions de sollicitations radiales (OX, OZ).

4. Articulation hydroélastique selon l'une des revendications 1 ou 2, **caractérisée en ce que** des circuits hydrauliques sont configurés pour présenter, selon une direction de sollicitations radiales sensiblement commune, des minima de rigidité dynamique différents.

## Patentansprüche

1. Hydroelastisches Gelenk (1, 11, 21), das einen inneren Mantel (3, 13, 23) und einen äußeren Mantel (2, 12, 22) aufweist, die in etwa coaxial verlaufen, **dadurch gekennzeichnet, dass** die Mäntel mit einer elastomeren Hülse (4, 14, 24) fest verbunden sind, wobei die elastomere Hülse entlang ihrer Achse (OY) radiale, unabhängige und in etwa parallele Hydraulikkreise (5, 5', 6, 6', 25) aufweist, wobei die Hydraulikkreise Querschnittsänderungen aufweisen.

2. Hydroelastisches Gelenk nach Anspruch 1, **dadurch gekennzeichnet, dass** es aus zwischen einem inneren Mantel (23) und einem äußeren Mantel (22) in axialer Richtung nebeneinander angeordneten Grundelementen (20) besteht, wobei jedes Grundelement einen weiteren äußeren Mantel (29) und einen weiteren inneren Mantel (26) aufweist, die fest mit einer elastomeren Hülse (24) verbunden sind, wobei die Hydraulikkreise (25) zwischen den Grundelementen (20) offengelassen sind.

3. Hydroelastisches Gelenk nach einem der vorhergehenden Ansprüche, **dadurch gekennzeichnet, dass** die Hydraulikkreise so konfiguriert sind, dass sie in Abhängigkeit von den verschiedenen radialen Beanspruchungsrichtungen (OX, OZ) Minima der dynamischen Steifigkeit aufweisen.

4. Hydroelastisches Gelenk nach einem der Ansprüche 1 oder 2, **dadurch gekennzeichnet, dass** die Hydraulikkreise so konfiguriert sind, dass sie in einer in etwa gemeinsamen Richtung von radialen Beanspruchungen unterschiedliche Minima der dynamischen Steifigkeit aufweisen.

## Claims

1. Hydroelastic joint (1, 11, 21) comprising an internal armature (3, 13, 23) and an essentially coaxial external armature (2, 12, 22),
**characterised in that**
the said armatures are attached to an elastomer sleeve (4, 14, 24), the said elastomer sleeve having radial, independent and essentially parallel hydraulic circuits (5, 5', 6, 6', 25) along its axis (OY), and the said hydraulic circuits having cross-section variations.

2. Hydroelastic joint according to Claim 1,
**characterised in that**
it consists of basic elements (20) arranged axially adjacent to one another between an internal armature (23) and an external armature (22), each basic element comprising an external sub-armature (29) and an internal sub-armature (26) attached to an elastomer sleeve (24), the said hydraulic circuits (25) being formed between the said basic elements (20).

3. Hydroelastic joint according to either of the preceding claims,
**characterised in that**
the hydraulic circuits are configured so as to give dynamic rigidity minima in different radial loading directions (OX, OZ).

4. Hydroelastic joint according to either of Claims 1 or 2,
**characterised in that**
hydraulic circuits are configured so as to give different dynamic rigidity minima along an essentially common radial loading direction.
